# EUROPEAN PATENT APPLICATION

(11) **EP 4 525 013 A1**
(43) Date of publication of application: **19.03.2025**
(21) Application number: 23831415.7
(22) Date of filing: 27.06.2023
(51) Int. Cl.: H01G 11/78, H01M 50/209, H01M 50/213, H01M 50/271, H01M 50/289

(54) **ELECTRIC POWER STORAGE DEVICE**

(30) Priority: 28.06.2022 JP 2022103488
(71) Applicant: GS Yuasa International Ltd., Kisshoin, Minami-ku, Kyoto-shi, Kyoto 601-8520 (JP)
(72) Inventor: IKEDA, Takashi, Kyoto-shi, Kyoto 601-8520 (JP); WATANO, Ibuki, Kyoto-shi, Kyoto 601-8520 (JP); INOUE, Tomoshige, Kyoto-shi, Kyoto 601-8520 (JP)
(74) Representative: Isarpatent
(86) International application number: PCT/JP2023/023698
(87) International publication number: WO 2024/004975

(57) **Abstract**

An energy storage apparatus (10) includes: an energy storage device unit (210) including an energy storage device (211); an outer case (100) including an outer case body (110) opened to one side in a first direction, the outer case housing the energy storage device unit (210); and a first member (inner case upper wall (310)) disposed on one side in the first direction with respect to the energy storage device unit (210), in which the outer case (100) includes an outer case bottom wall (111) disposed on another side in the first direction and an outer case side wall (112) facing to a second direction intersecting the first direction, and the first member is fixed to a second member (weight (400)) fixed to the outer case side wall (112), or is fixed to the outer case side wall (112).

## Description

### TECHNICAL FIELD

The present invention relates to an energy storage apparatus including an energy storage device unit including an energy storage device.

### BACKGROUND ART

Conventionally, there has been known an energy storage apparatus which includes an energy storage device unit including an energy storage device and an outer case which houses the energy storage device unit. Patent Document 1 discloses a power supply device (energy storage apparatus) in which a battery (energy storage device) is housed in a waterproof case (outer case), and the battery is fixed in the waterproof case by a fixing member. In Patent Document 1, the battery is fixed to the bottom plate of the fixing member, and the peripheral edge of the top plate of the fixing member comes into contact with the inner wall of the waterproof case, so that the movement of the top plate in the horizontal direction is suppressed, and the fixing member is suppressed from moving in the horizontal direction in the waterproof case.

### PRIOR ART DOCUMENT

### PATENT DOCUMENT

Patent Document 1: JP-A-2013-206816

### SUMMARY OF THE INVENTION

### PROBLEMS TO BE SOLVED BY THE INVENTION

In the above-mentioned conventional energy storage apparatus, there is a possibility that the movement of the energy storage device unit with respect to the outer case cannot be easily suppressed and vibration resistance or impact resistance cannot be easily improved. In the power supply device (energy storage apparatus) disclosed in Patent Document 1, since it is necessary to bring the peripheral edge of the top plate of the fixing member into contact with the inner wall of the waterproof case, dimensional accuracy of the top plate is required. When the size of the top plate is large, the fixing member cannot be inserted into the waterproof case, and when the size of the top plate is small, the fixing member may move in the waterproof case. As described above, in the conventional energy storage apparatus, vibration resistance or impact resistance may not be easily improved.

The present invention has been made by the inventor of the present application in view of the above problems, and an object of the present invention is to provide an energy storage apparatus capable of easily improving vibration resistance or impact resistance.

### MEANS FOR SOLVING THE PROBLEMS

An energy storage apparatus according to one aspect of the present invention includes: an energy storage device unit including an energy storage device; an outer case including an outer case body opened to one side in a first direction, the outer case housing the energy storage device unit; and a first member disposed on one side in the first direction with respect to the energy storage device unit, in which the outer case includes an outer case bottom wall disposed on another side in the first direction and an outer case side wall facing to a second direction intersecting the first direction, and the first member is fixed to a second member fixed to the outer case side wall, or is fixed to the outer case side wall.

### ADVANTAGES OF THE INVENTION

According to the energy storage apparatus of the present invention, vibration resistance or impact resistance can be easily improved.

### BRIEF DESCRIPTION OF THE DRAWINGS

Fig. 1 is a perspective view showing a configuration of an energy storage apparatus according to an embodiment.
Fig. 2 is a perspective view showing an internal configuration of an outer case of the energy storage apparatus according to the embodiment.
Fig. 3 is an exploded perspective view showing respective constituent elements when an energy storage unit included in the energy storage apparatus according to the embodiment is disassembled.
Fig. 4 is a perspective view showing a configuration of an energy storage device unit according to the embodiment.
Fig. 5 is a perspective view illustrating a configuration in which an inner case upper wall according to the embodiment is fixed to a weight.
Fig. 6 is a front view illustrating a configuration in which an inner case upper wall according to the embodiment is fixed to a weight.
Fig. 7 is a front view illustrating a configuration in which an inner case upper wall according to a modification of the embodiment is fixed to an outer case side wall.
Fig. 8 is a front view illustrating a configuration in which a first member according to another modification of the embodiment is fixed to an outer case side wall.

### MODE FOR CARRYING OUT THE INVENTION

(1) An energy storage apparatus according to one aspect of the present invention includes: an energy storage device unit including an energy storage device; an outer case including an outer case body opened to one side in a first direction, the outer case housing the energy storage device unit; and a first member disposed on one side in the first direction with respect to the energy storage device unit, in which the outer case includes an outer case bottom wall disposed on another side in the first direction and an outer case side wall facing to a second direction intersecting the first direction, and the first member is fixed to a second member fixed to the outer case side wall, or is fixed to the outer case side wall.
   With such a configuration, in the energy storage apparatus, the energy storage device unit is interposed between the first member and the outer case bottom wall, and the first member is fixed to the second member fixed to the outer case side wall or is fixed to the outer case side wall. With such a configuration, the energy storage device unit can be easily fixed to the outer case and hence, the movement of the energy storage device unit with respect to the outer case can be restricted with a simple configuration. Therefore, vibration resistance or impact resistance of the energy storage apparatus can be easily improved.
(2) In the energy storage apparatus according to (1), the second member may be a weight.
   With such a configuration, the first member is fixed to the weight fixed to the outer case side wall and hence, the first member can be fixed to the outer case side wall via the weight. With such a configuration, the energy storage device unit can be easily fixed to the outer case and hence, the movement of the energy storage device unit with respect to the outer case can be restricted with a simple configuration.
(3) In the energy storage apparatus according to (1) or (2), the first member may include an extending portion extending toward the outer case side wall, and the extending portion may be fixed to the second member or the outer case side wall.
   With such a configuration, by providing the extending portion in the first member and fixing the extending portion to the second member or the outer case side wall, the energy storage device unit can be easily fixed to the outer case. With such a simple configuration, it is possible to restrict the movement of the energy storage device unit with respect to the outer case.
(4) The energy storage apparatus according to any one of (1) to (3) may further include an inner case housed in the outer case and housing and holding the energy storage device unit, and the first member may be an upper wall of the inner case.
   With such a configuration, by using the first member as the upper wall of the inner case which houses the energy storage device unit, the energy storage device unit can be easily fixed to the outer case using the upper wall of the inner case. With such a simple configuration, it is possible to restrict the movement of the energy storage device unit with respect to the outer case.
(5) In the energy storage apparatus according to (4), the inner case may include three or more walls formed separately from each other.
   With such a configuration, the inner case is assembled from three or more walls which are formed separately from each other and hence, the respective walls can be easily disposed on the outer surface of the energy storage device unit. Since the respective walls can be disposed on the outer surface of the energy storage device unit, the movement of the energy storage device unit can be easily restricted.
(6) In the energy storage apparatus according to (4) or (5), the energy storage device unit may include a side member disposed on a side of the energy storage device, and the side member may be in contact with an inner surface of the inner case.

With such a configuration, the movement of the energy storage device unit in the inner case can be restricted by bringing the side member of the energy storage device unit into contact with the inner surface of the inner case.

Hereinafter, an energy storage apparatus according to an embodiment (and a modification example thereof) of the present invention is described with reference to the drawings. The embodiments described below show comprehensive or specific examples. However, numerical values, shapes, materials, constituent elements, arrangement positions and connection modes of the constituent elements, manufacturing steps, order of manufacturing steps, and the like described in the following embodiments are only examples and are not intended to limit the present invention. In each drawing, dimensions and the like are not strictly shown. In the drawings, the same or similar constituent elements are denoted by the same reference numerals.

In the following description and drawings, an opposing direction of a pair of short side walls of an outer case of an energy storage apparatus, an aligning direction of a pair of external terminals included in an energy storage device unit, an opposing direction of a pair of side members included in the energy storage device unit, an opposing direction of a long side surface of the energy storage device and a side member of the energy storage device unit, an aligning direction (opposing direction) of a side member of the energy storage device unit and a short side wall of an inner case, or an opposing direction of a pair of long side surfaces of the energy storage device is defined as an X-axis direction. An opposing direction of the long side wall of the outer case of the energy storage apparatus, a projecting direction of the external terminal of the energy storage device unit, an opposing direction of a pair of short side surfaces of a case of the energy storage device, or an aligning direction of a pair of electrode terminals included in the energy storage device is defined as a Y-axis direction. An aligning direction of the opening of the body of the outer case of the energy storage apparatus and the outer case bottom wall, an aligning direction of the energy storage device unit and the outer case bottom wall, an aligning direction (opposing direction) of the inner case upper wall and the inner case bottom wall, an aligning direction of the body and the lid of the case of the energy storage device, a projecting direction of the electrode terminal of the energy storage device, or a vertical direction is defined as a Z-axis direction. These X-axis direction, Y-axis direction, and Z-axis direction are directions that intersect with each other (orthogonal in the present embodiment).

In the following description, the X-axis plus direction indicates an arrow direction of the X-axis, and the X-axis minus direction indicates the direction opposite to the X-axis plus direction. Simply referring to the X-axis direction refers to either or both of the X-axis plus direction and the X-axis minus direction. The same applies to the Y-axis direction and the Z-axis direction. Hereinafter, the Z-axis direction may also be referred to as a first direction (Z-axis plus direction is one side of the first direction, and Z-axis minus direction is the other side in the first direction), the X-axis direction may also be referred to as a second direction, and the Y-axis direction may also be referred to as a third direction. The X-axis direction may be described as the left-right direction. Expressions indicating relative directions or postures, such as parallel and orthogonal, strictly include also cases where the directions or postures are not the same. For example, the fact that two directions are parallel not only means that the two directions are completely parallel, but also means that they are substantially parallel, that is, that they include a difference of, for example, about several percent. In the following description, the expression "insulation" means "electrical insulation".

### (Embodiment)

### [1 General Description of Energy Storage Apparatus 10]

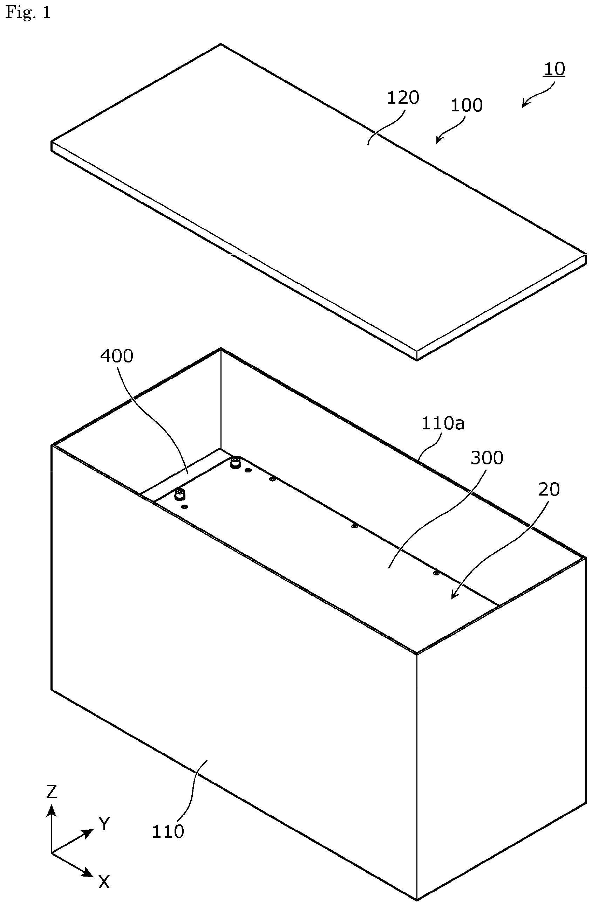

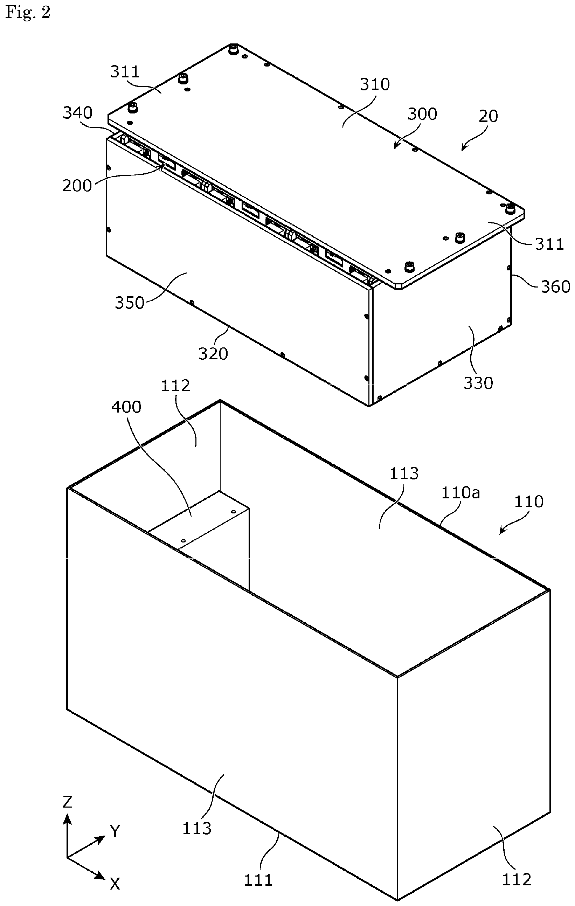

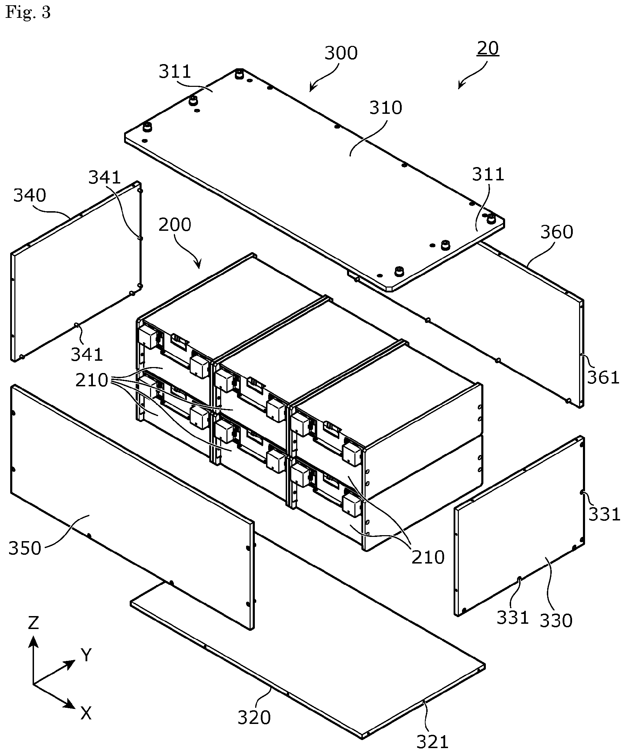

First, a general description of an energy storage apparatus 10 according to the present embodiment will be given. Fig. 1 is a perspective view showing a configuration of an energy storage apparatus 10 according to the present embodiment. Fig. 1 shows a state where the outer case lid body 120 is removed from the outer case body 110 of the outer case 100 included in the energy storage apparatus 10. Fig. 2 is a perspective view showing an internal configuration of the outer case 100 of the energy storage apparatus 10 according to the present embodiment. Fig. 2 shows a state where the energy storage unit 20 inside the outer case 100 of the energy storage apparatus 10 is taken out from the outer case body 110. Fig. 3 is an exploded perspective view showing respective constituent elements when the energy storage unit 20 included in the energy storage apparatus 10 according to the present embodiment is disassembled.

The energy storage apparatus 10 is an apparatus capable of charging electricity from the outside and discharging electricity to the outside, and has a rectangular parallelepiped shape in the present embodiment. The energy storage apparatus 10 is used for power storage, power supply, or the like. The energy storage apparatus 10 is used as a battery or the like for driving or starting an engine of a moving body such as an automobile, a motorcycle, a forklift, a watercraft, a ship, a snowmobile, an agricultural machine, a construction machine, or a railway vehicle for electric railway. Examples of the automobile include an electric vehicle (EV), a hybrid electric vehicle (HEV), a plug-in hybrid electric vehicle (PHEV), and a fossil fuel (Gasoline, light oil, liquefied natural gas, etc.) automobile. Examples of the railway vehicle for an electric railway include a train, a monorail, a linear motor car, and a hybrid train including both a diesel engine and an electric motor. The energy storage apparatus 10 can also be used as a stationary battery or the like used for home use, business use, or the like.

As shown in Fig. 1 to Fig. 3, the energy storage apparatus 10 includes an outer case 100, an energy storage unit 20, and a weight 400. The energy storage unit 20 includes an energy storage device unit group 200 including a plurality of energy storage device units 210, and an inner case 300. In addition to the above configuration, the energy storage apparatus 10 also includes a total terminal of positive and negative electrodes of the energy storage apparatus 10, a conductive member (electric wire, bus bar, etc.) that connects the energy storage device units 210 to each other or connects the energy storage device unit 210 and the total terminal, a circuit board that monitors or controls a state (voltage, temperature, charge-discharge state, and the like) of the energy storage device unit 210, and electric components such as a relay, a fuse, a current sensor, and a connector, but illustration and detailed description thereof are omitted.

The outer case 100 is a case for housing the energy storage device unit 210. The outer case 100 is a rectangular parallelepiped (box-shaped) case (outer box) configuring a case (outer case, housing, outer shell) outside the energy storage apparatus 10. The outer case 100 is disposed outward the energy storage unit 20 (energy storage device unit group 200, inner case 300), the weight 400, and the like, fixes them at predetermined positions, and protects them from impact or the like. The outer case 100 is a metal case formed of a metal member such as aluminum, an aluminum alloy, stainless steel, iron, or a plated steel plate. The outer case 100 may be formed of a member having an insulating property such as any resin material which can be used for a cover member 216 of the energy storage device unit 210 described later.

As illustrated in Fig. 1, the outer case 100 includes an outer case body 110 configuring a body of the outer case 100 and an outer case lid body 120 configuring a lid body of the outer case 100. The outer case body 110 is a bottomed rectangular cylindrical case that opens in the Z-axis plus direction (one side in the first direction), and houses and fixes the energy storage unit 20 (energy storage device unit group 200, inner case 300), the weight 400, and the like at a predetermined position.

Specifically, as shown in Fig. 2, in the outer case body 110, a rectangular opening 110a is formed in the Z-axis plus direction (one side in the first direction), and an outer case bottom wall 111 which is a bottom wall of the outer case in the vertical direction is formed in the Z-axis minus direction (the other side in the first direction). The outer case bottom wall 111 is formed in a flat plate shape and a rectangular shape. The outer case body 110 includes a pair of outer case side walls 112 that are flat plate-shaped and rectangular short side walls on both sides in the X-axis direction, and a pair of outer case side walls 113 that are flat plate-shaped and rectangular long side walls on both sides in the Y-axis direction. The outer case side wall 112 is a wall opposed to (orthogonal to) the X-axis direction (second direction intersecting the first direction), and is disposed at an end portion of the outer case body 110 in the X-axis direction (second direction). The outer case side wall 113 is a wall opposed to (orthogonal to) the Y-axis direction (third direction intersecting the first direction and the second direction), and is disposed at an end portion of the outer case body 110 in the Y-axis direction (third direction). The pair of outer case side walls 112 are opposed to each other in the X-axis direction (second direction intersecting the first direction). The pair of outer case side walls 113 are opposed to each other in the Y-axis direction (third direction intersecting the first direction and the second direction).

The outer case lid body 120 is a plate-like and rectangular lid that closes the opening 110a of the outer case body 110. The outer case body 110 and the outer case lid body 120 are joined to each other by screwing or the like with bolts. As a result, the outer case 100 has a structure in which the inside is sealed (sealed). The outer case body 110 and the outer case lid body 120 may be joined by welding, bonding, or the like. The outer case body 110 and the outer case lid body 120 may be made of the same material or different materials. The outer case body 110 (outer case bottom wall 111, outer case side walls 112, 113) and the outer case lid body 120 may have any shape depending on the configuration (number, size, shape, and the like) of the contents of the outer case 100. In this case, the outer case side wall 112 may be a long side wall, and the outer case side wall 113 may be a short side wall.

As shown in Fig. 3, the energy storage device unit group 200 includes a plurality of energy storage device units 210. In the present embodiment, the energy storage device unit group 200 includes six energy storage device units 210 in which three energy storage device units 210 arranged in the X-axis direction are arranged in two stages in the Z-axis direction. The number of the energy storage device units 210 included in the energy storage device unit group 200 is not particularly limited, and any number of energy storage device units 210 may be arranged in the Z-axis direction, any number of energy storage device units 210 may be arranged in the X-axis direction, or a plurality of energy storage device units 210 may be arranged also in the Y-axis direction. The energy storage device unit group 200 may include only one energy storage device unit 210. In the present embodiment, the energy storage device units 210 arranged in the Z-axis direction are connected in series, and the energy storage device units 210 arranged in the X-axis direction are connected in parallel, but any energy storage device units 210 may be connected in series or in parallel. The configuration of the energy storage device unit 210 will be described in detail later.

The inner case 300 is a case for housing the energy storage device unit 210. The inner case 300 is a case (inner box) having a substantially rectangular parallelepiped shape (box shape) configuring a case (housing) inside the energy storage apparatus 10. The inner case 300 is disposed outward the energy storage device unit group 200, houses and holds the energy storage device unit group 200 (energy storage device unit 210), and protects the energy storage device unit group from an impact or the like. The inner case 300 is a metal case formed of a metal member such as aluminum, an aluminum alloy, stainless steel, iron, or a plated steel plate. In the present embodiment, the inner case 300 is formed of a member having the same material as the outer case 100, but may be formed of a member having the material different from the material of the outer case 100. The inner case 300 may be formed of a member having an insulating property such as any resin material which can be used for a cover member 216 of the energy storage device unit 210 described later. In the present embodiment, the inner case 300 housing the energy storage device unit 210 is housed in the outer case 100.

As illustrated in Figs. 2 and 3, the inner case 300 includes an inner case upper wall 310 that is an upper wall of the inner case 300 in the vertical direction, and an inner case bottom wall 320 that is a bottom wall of the inner case 300 in the vertical direction. The inner case 300 includes inner case side walls 330 to 360 configuring four side walls in the X-axis direction or the Y-axis direction of the inner case 300. In the present embodiment, the inner case upper wall 310, the inner case bottom wall 320, and the inner case side walls 330 to 360 are all configured separately. That is, the inner case 300 includes six walls configured separately from each other.

The inner case upper wall 310 is a flat plate-like rectangular upper wall which is disposed in the Z-axis plus direction (one side in the first direction) of the energy storage device unit group 200 and is parallel to the XY plane (opposed to (orthogonal to) the Z-axis direction). The inner case upper wall 310 is disposed between the energy storage device unit group 200 and the outer case lid body 120 in the Z-axis direction. The inner case upper wall 310 is joined to end portions of the inner case side walls 330, 340, and 360 in the Z-axis plus direction by screws 313. In the present embodiment, the inner case upper wall 310 is disposed in the Z-axis plus direction of the inner case side walls 330, 340, and 360, and is joined to the end portions of the inner case side walls 330, 340, and 360 in the Z-axis plus direction in the Z-axis direction. On the upper surface of the inner case upper wall 310, electric components and the like such as a circuit board, a relay, a fuse, a current sensor, a connector and the like which monitor or control a state (voltage, temperature, charge-discharge state, and the like) of the energy storage device unit 210 may be disposed.

In the present embodiment, the inner case upper wall 310 is fixed to the weight 400. Specifically, the inner case upper wall 310 includes extending portions 311 extending on both sides in the X-axis direction at both ends in the X-axis direction, and the extending portions 311 are fixed to the weights 400. A configuration in which the inner case upper wall 310 is fixed to the weight 400 will be described in detail later. The inner case upper wall 310 is an example of a "first member". The first member (inner case upper wall 310) is a part of the inner case 300, and is joined to other portions (inner case side walls 330, 340, 360) of the inner case 300.

The inner case bottom wall 320 is a flat plate-like rectangular bottom wall which is disposed in the Z-axis minus direction (the other side in the first direction) of the energy storage device unit group 200 and is parallel to the XY plane (is opposed to (is orthogonal to) the Z-axis direction). The inner case bottom wall 320 is disposed between the energy storage device unit group 200 and the outer case bottom wall 111 in the Z-axis direction. The inner case bottom wall 320 is joined to end portions of the inner case side walls 330 to 360 in the Z-axis minus direction by screwing or the like with a bolt. In the present embodiment, the inner case bottom wall 320 is disposed between the inner case side walls 330, 340 in the X-axis direction, and is joined to end portions of the inner case side walls 330, 340 in the Z-axis minus direction in the X-axis direction. The inner case bottom wall 320 is disposed between the inner case side walls 350 and 360 in the Y-axis direction, and is joined to the end portions of the inner case side walls 350 and 360 in the Z-axis minus direction in the Y-axis direction. The inner case bottom wall 320 may be bonded (fixed) to the outer case bottom wall 111 with an adhesive, a double-sided tape, or the like.

The inner case side walls 330 and 340 are flat plate-like and rectangular short side walls which are disposed on both sides in the X-axis direction (second direction) of the energy storage device unit group 200 and are parallel to the YZ plane (which are opposed to (orthogonal to) the X-axis direction). The inner case side wall 330 is disposed in the X-axis plus direction of the energy storage device unit group 200, and the inner case side wall 340 is disposed in the X-axis minus direction of the energy storage device unit group 200. The inner case side walls 330 and 340 are disposed between the energy storage device unit group 200 and the outer case side wall 112 (between the energy storage device unit group 200 and the weight 400) in the X-axis direction. The inner case side walls 330 and 340 are joined to end portions of the inner case upper wall 310, the inner case bottom wall 320, and the inner case side walls 350 and 360 in the X-axis direction by screwing or the like with bolts. In the present embodiment, the inner case side walls 330 and 340 are disposed outside the inner case bottom wall 320 and the inner case side wall 360 in the X-axis direction, and are joined to both end portions of the inner case bottom wall 320 and the inner case side wall 360 in the X-axis direction. Specifically, bolts (bolts 331 and 341 in Fig. 3 and the like) are inserted into the plate thicknesses of the inner case side walls 330 and 340, and are screwed into screw holes (screw holes 321 and 361 in Fig. 3 and the like) of the inner case bottom wall 320 and the inner case side wall 360. With such a configuration, the energy storage device unit group 200 can be firmly restrained by the inner case side walls 330 and 340. The energy storage device unit group 200 can be easily housed in the inner case 300.

The inner case side walls 350 and 360 are long side walls having a flat plate shape and a rectangular shape which are disposed on both sides of the energy storage device unit group 200 in the Y-axis direction (third direction) and are parallel to the XZ plane (opposed to (orthogonal to) the Y-axis direction). The inner case side wall 350 is disposed in the Y-axis minus direction of the energy storage device unit group 200, and the inner case side wall 360 is disposed in the Y-axis plus direction of the energy storage device unit group 200. The inner case side walls 350 and 360 are disposed between the energy storage device unit group 200 and the outer case side wall 113 in the Y-axis direction. The inner case side wall 350 is joined to end portions of the inner case bottom wall 320 and the inner case side walls 330 and 340 in the Y-axis minus direction by screwing or the like with bolts. In the present embodiment, the inner case side wall 350 is disposed in the Y-axis minus direction of the inner case bottom wall 320 and the inner case side walls 330 and 340, and is joined to end portions in the Y-axis minus direction of the inner case bottom wall 320 and the inner case side walls 330 and 340 in the Y-axis direction. The inner case side wall 360 is joined to end portions of the inner case upper wall 310, the inner case bottom wall 320, and the inner case side walls 330 and 340 in the Y-axis plus direction by screwing or the like with bolts. In the present embodiment, the inner case side wall 360 is disposed in the Y-axis plus direction of the inner case bottom wall 320, and is joined to the end portion of the inner case bottom wall 320 in the Y-axis plus direction in the Y-axis direction.

The inner case 300 restricts the movement of the energy storage device unit group 200 by at least one wall of the inner case upper wall 310, the inner case bottom wall 320, and the inner case side walls 330 to 360 coming into contact with the energy storage device unit group 200. In the present embodiment, the inner case upper wall 310, the inner case bottom wall 320, and the inner case side walls 330, 340, and 360 are brought into contact with the energy storage device unit group 200, but the inner case side wall 350 may also be brought into contact with the energy storage device unit group 200. At least one wall of the inner case upper wall 310, the inner case bottom wall 320, and the inner case side walls 330 to 360 has, on the inner surface, a plate-like member such as a rubber plate or a resin member for tolerance absorption, vibration suppression, or anti-slip, and the plate-like member or the like may be brought into contact with the energy storage device unit group 200.

The walls of the inner case upper wall 310, the inner case bottom wall 320, and the inner case side walls 330 to 360 may be joined to each other by welding, bonding, or the like. All of the inner case upper wall 310, the inner case bottom wall 320, and the inner case side walls 330 to 360 may be made of a member having the same material, or any of the walls may be made of members having different materials. The inner case upper wall 310, the inner case bottom wall 320, and the inner case side walls 330 to 360 may have any shape depending on the size, shape, and the like of the energy storage device unit group 200. In this case, the inner case side walls 330 and 340 may be long side walls, and the inner case side walls 350 and 360 may be short side walls.

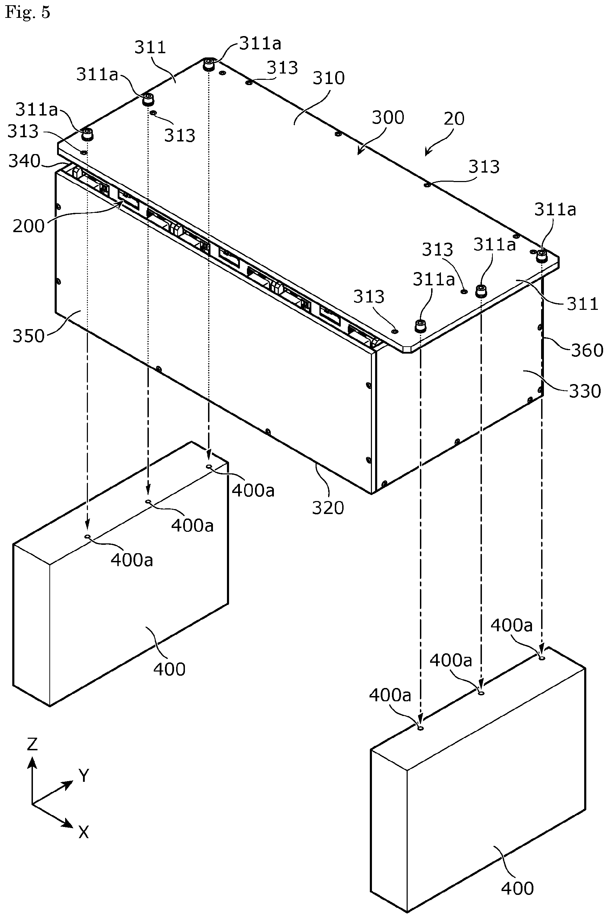

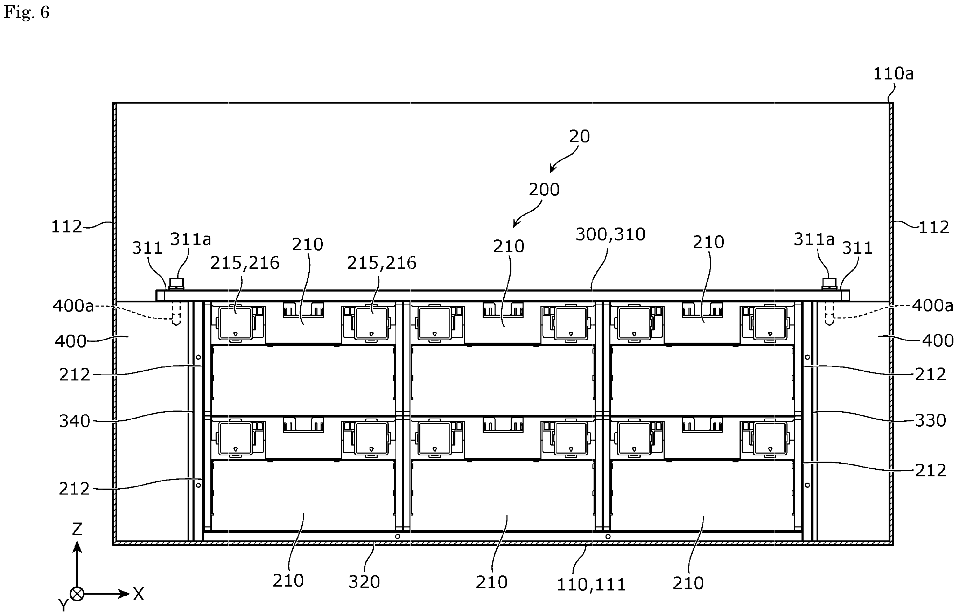

The weight 400 is a weight disposed inside the outer case 100 and outward the inner case 300. The weight 400 is a weight (counter weight) for adjusting the weight of the energy storage apparatus 10. In the present embodiment, the weight 400 has a rectangular parallelepiped shape that is flat in the X-axis direction (see Fig. 5). The weight 400 faces the outer case side wall 112 of the outer case body 110 of the outer case 100 and is disposed in contact with the outer case side wall 112. In the present embodiment, the weight 400 is joined (fixed) to the outer case side wall 112 by welding (spot welding or the like) or the like. The weight 400 may be joined (fixed) to the outer case side wall 112 by bonding using an adhesive, double-sided tape, or the like, welding, bolt joining, caulked joining, or the like. In the present embodiment, two weights 400 are disposed on both sides in the X-axis direction of the energy storage unit 20 (energy storage device unit group 200, inner case 300) (see Fig. 5, Fig. 6 and the like). Specifically, two weights 400 are disposed between the inner case side wall 330 and the outer case side wall 112 in the X-axis plus direction and between the inner case side wall 340 and the outer case side wall 112 in the X-axis minus direction.

As the weight of the weight 400, the weight necessary for adjusting the weight of the energy storage apparatus 10 is appropriately determined, but in the present embodiment, the weight of one weight 400 is about 50 to 60 kg. The total weight of all (In the present embodiment, two) weights 400 provided in the energy storage apparatus 10 is preferably 1/5 or more, more preferably 1/4 or more, and still more preferably 1/3 or more of the total weight of the energy storage apparatus 10. The material of the weight 400 is not particularly limited, but can be formed of any metal member that can be used for the outer case 100 and the inner case 300, such as aluminum, an aluminum alloy, stainless steel, or iron. In the present embodiment, the two weights 400 are formed of a member having the same material as the outer case 100 and the inner case 300, but may be formed of a member having material different from the outer case 100 and the inner case 300, or the two weights 400 may be formed of members having materials different from each other. The weight 400 is an example of a "second member".

### [2 Description of energy storage device unit 210]

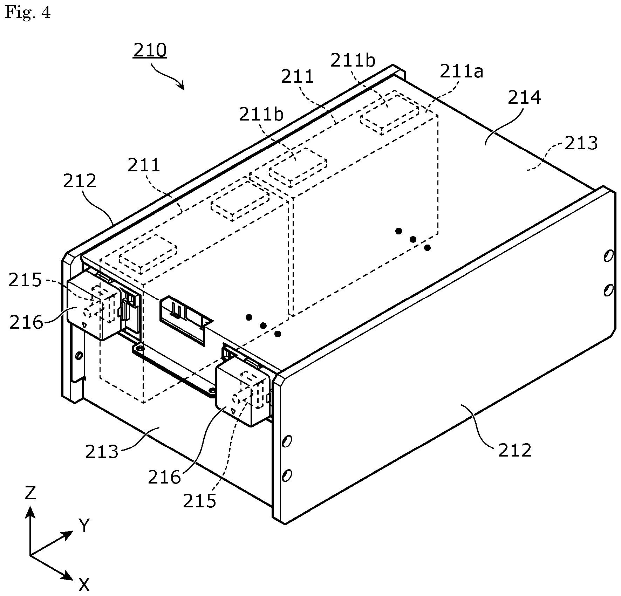

Next, the configuration of the energy storage device unit 210 is described in detail. Fig. 4 is a perspective view showing a configuration of the energy storage device unit 210 according to the present embodiment. Fig. 4 is an enlarged view of one energy storage device unit 210 shown in Fig. 3, and the energy storage devices 211 located therein and the external terminal 215 are shown by broken lines. Since all of the plurality of energy storage device units 210 included in the energy storage apparatus 10 (energy storage unit 20, energy storage device unit group 200) have the same configuration, Fig. 4 shows one energy storage device unit 210, and hereinafter, the configuration of one energy storage device unit 210 will be described in detail.

The energy storage device unit 210 is a battery module (assembled battery) having a substantially rectangular parallelepiped shape capable of charging electricity from the outside and discharging electricity to the outside. As shown in Fig. 4, the energy storage device unit 210 includes a plurality of energy storage devices 211, a pair of end plates 212, a pair of side plates 213, a cover member 214, a pair of (positive electrode and negative electrode) external terminals 215, and a pair of (positive electrode and negative electrode) cover members 216. In addition to the above-mentioned configuration, the energy storage device unit 210 also includes a spacer disposed between the energy storage devices 211, a bus bar which connects the electrode terminals 211b of the plurality of energy storage devices 211 to each other, a bus bar frame which positions the bus bar and the like, but the illustration and the detailed description thereof are omitted.

The energy storage device 211 is a secondary battery (battery cell) capable of charging and discharging electricity, and more specifically, is a nonaqueous electrolyte secondary battery such as a lithium ion secondary battery. In the present embodiment, the plurality of energy storage devices 211 are arranged side by side in the X-axis direction and the Y-axis direction, but the aligning direction and the number of energy storage devices 211 are not particularly limited, and only one energy storage device 211 may be arranged. In the present embodiment, when the energy storage device 211 is disposed such that the direction in which the pair of electrode terminals 211b are arranged is the Y-axis direction, the energy storage device 211 has a rectangular parallelepiped shape (prismatic) which is flat in the X-axis direction, and has a long side surface and a short side surface. In the energy storage device 211, the X-axis direction is a thickness direction of the energy storage device 211. The shape of the energy storage device 211 is not limited to the rectangular parallelepiped shape, and may be a polygonal columnar shape, a cylindrical shape, a long cylindrical shape, an elliptic columnar shape or the like other than the rectangular parallelepiped shape. The energy storage device 211 is not limited to the nonaqueous electrolyte secondary battery, and may be a secondary battery other than the nonaqueous electrolyte secondary battery, or may be a capacitor. The energy storage device 211 may be not a secondary battery but a primary battery that can use stored electricity without being charged by a user. The energy storage device 211 may be a battery using a solid electrolyte. The energy storage device 211 may be a pouch type energy storage device.

The energy storage device 211 includes a case 211a having a long side surface and a short side surface, and a pair of (positive electrode and negative electrode) electrode terminals 211b. An electrode assembly, a pair of (positive electrode and negative electrode) current collectors, an electrolyte solution (nonaqueous electrolyte), and the like are housed in the case 211a, but illustration and detailed description thereof are omitted. The case 211a includes a case main body in which an opening is formed, and a lid portion which closes the opening of the case main body, and the electrode terminal 211b is arranged in a state of protruding from the lid portion in the Z-axis plus direction. The electrode terminal 211b is electrically connected to the positive electrode plate and the negative electrode plate of the electrode assembly via a conductive current collector. The electrode assembly is an energy storage element (power generating element) formed by stacking a positive electrode plate, a negative electrode plate, and a separator.

The end plates are members disposed at both ends of the arrangement when the plurality of energy storage devices is arranged such that long side surfaces of the respective energy storage devices are opposed to each other. The side plates are members connected to the end plates at both ends. The pair of end plates 212 sandwich the plurality of energy storage devices 211 from both sides in the aligning direction (X-axis direction) when the plurality of energy storage devices is disposed such that long side surfaces of the respective energy storage devices 211 face each other. The pair of end plates 212 are restraining members which compress (restrain) the plurality of energy storage devices 211 from both sides in the aligning direction (X-axis direction). The pair of side plates 213 are connected to a pair of end plates for restraining the plurality of energy storage devices 211. The end plate 212 and the side plate 213 are formed of a metal member such as steel or stainless steel from the viewpoint of securing strength, but the material thereof is not particularly limited, and the end plate and the side plate may be formed of an insulating member having high strength, or an insulation treatment may be applied to the metal member.

The end plate 212 is a plate-like and rectangular member disposed in the X-axis direction of the energy storage device 211. The pair of end plates 212 are disposed on both sides in the X-axis direction of the plurality of energy storage devices 211, and sandwich and hold the plurality of energy storage devices 211 from both sides in the X-axis direction (arrangement direction of the energy storage devices 211). The end plate 212 is disposed to face the long side surface of the energy storage device 211. The end plate 212 may be a flat block-shaped member or the like instead of a plate-like member. The end plate 212 is an example of a "side member" disposed on a side of the energy storage device 211. That is, the "side member" is a member which is disposed on a side of the energy storage device 211 and is disposed on a surface intersecting with a surface of the energy storage device unit 210 on which the external terminals 215 are disposed.

In a state where the energy storage device units 210 (energy storage device unit group 200) are disposed in the inner case 300, the end plates 212 (side members) of the energy storage device units 210 positioned at the end portions in the X-axis direction are brought into contact with the inner surface of the inner case 300 (see Fig. 6). That is, the end plates 212 positioned at both end portions of the energy storage device unit group 200 in the X-axis direction are brought into contact (surface contact) with inner surfaces of the inner case side walls 330 and 340. When the inner case side wall 330 or 340 includes the plate-shaped member on the inner surface as described above, the end plate 212 comes into contact (surface contact) with the plate-shaped member. When another member (plate-shaped member) is sandwiched between the end plate 212 and the inner surface of the inner case 300, the end plate 212 indirectly contacts the inner surface of the inner case 300 via another member (plate-shaped member). The two energy storage device units 210 disposed adjacently to each other in the X-axis direction are disposed in a state where the end plates 212 which are opposed to each other in the X-axis direction are brought into contact (surface contact) with each other (overlap each other in the X-axis direction). Similarly, the two energy storage device units 210 disposed adjacently to each other in the Z-axis direction are disposed in a state where the end plates 212 which are opposed to each other in the Z-axis direction are brought into contact with each other (overlap each other in the Z-axis direction). When another member is sandwiched between the end plates 212, the end plates 212 indirectly contact each other via another member.

As described above, the outer shape of the energy storage device unit 210 does not have a portion projecting from the end plate 212 except for the surface in the Y-axis minus direction. The end plate 212 has a flat (flat) outer surface in the X-axis direction, and has flat (flat) end surfaces on both sides in the Y-axis direction and on both sides in the Z-axis direction. Accordingly, the energy storage device units 210 can be disposed in contact with each other without rattling in the X-axis direction and can be stacked directly in the Z-axis direction. The energy storage device unit 210 and the inner surface of the inner case 300 can be disposed in contact with each other without rattling.

The side plate 213 is a plate-like and rectangular member disposed in the Y-axis direction of the energy storage device 211. That is, the pair of side plates 213 are disposed on both sides of the plurality of energy storage devices 211 in the Y-axis direction. The side plate 213 is disposed to face the short side surface of the energy storage device 211. Both end portions of the side plate 213 in the X axis direction are attached to end portions of the pair of end plates 212 in the Y-axis direction, and the pair of end plates 212 are connected to each other, thereby restraining the plurality of energy storage devices 211. That is, the side plate 213 extends in the X-axis direction so as to straddle the plurality of energy storage devices 211, and applies a restraining force in the X-axis direction to the plurality of energy storage devices 211. In the present embodiment, the side plate 213 is joined (fixed) to the end plate 212 by a bolt and a nut (not illustrated), but may be joined (fixed) by welding, bonding, or the like. The side plate 213 may be a long belt-shaped member or the like instead of a plate-like member.

The cover member 214 is a member that covers the plurality of energy storage devices 211 and the like in the Z-axis plus direction, and protects the plurality of energy storage devices 211 and the like from external impact or the like. The cover member 214 is attached and fixed to the pair of side plates 213. In the present embodiment, the cover member 214 is a metal member, but may be a resin member.

The external terminal 215 is an external terminal which is electrically connected to the electrode terminal 211b of the energy storage device 211, charges electricity from the outside, and discharges electricity to the outside. That is, the external terminal 215 is a terminal member different from the electrode terminal 211b of the energy storage device 211. The external terminal 215 is formed of a conductive member made of metal such as aluminum, an aluminum alloy, copper, a copper alloy, or nickel, a combination thereof, or a conductive member other than metal. The external terminal 215 is disposed at an end portion of the energy storage device unit 210 in the Y-axis direction. In the present embodiment, a pair of (positive electrode and negative electrode) external terminals 215 arranged in the X-axis direction are disposed at the end portion in the Z-axis plus direction and at both end portions in the X-axis direction at the end portion in the Y-axis minus direction of the energy storage device unit 210. The external terminals 215 are arranged in a state of protruding in the Y-axis minus direction from a body portion (a portion where the energy storage devices 211 are arranged) of the energy storage device unit 210. Specifically, the external terminal 215 protrudes in the Y-axis minus direction from a surface of the side plate 213 in the Y-axis minus direction and a surface of the cover member 214 in the Y-axis minus direction.

The cover member 216 is a cover member of the external terminal 215 that is disposed so as to cover the external terminal 215 and insulates and protects the external terminal 215. The cover member 216 is formed of an insulating member such as polycarbonate (PC), polypropylene (PP), polyethylene (PE), polystyrene (PS), a polyphenylene sulfide resin (PPS), polyphenylene ether (PPE (including modified PPE)), polyethylene terephthalate (PET), polybutylene terephthalate (PBT), polyether ether ketone (PEEK), tetrafluoroethylene-perfluoroalkyl vinyl ether (PFA), polytetrafluoroethylene (PTFE), polyether sulfone (PES), polyamide (PA), an ABS resin, or a composite material thereof. The cover member 216 may be formed of an insulation-coated metal or the like. The cover member 216 thus protects the external terminal 215, and prevents the external terminal 215 from coming into contact with an external metal member or the like.

### [3 Description of configuration in which inner case upper wall 310 is fixed to weight 400]

Next, a configuration in which the inner case upper wall 310 (first member) is fixed to the weight 400 (second member) will be described in detail. Fig. 5 is a perspective view illustrating a configuration in which the inner case upper wall 310 according to the present embodiment is fixed to the weight 400. Fig. 5 shows a state before the inner case upper wall 310 (energy storage unit 20) is fixed to the weight 400. When the inner case upper wall 310 (energy storage unit 20) is fixed to the weight 400, the weight 400 is fixed to the outer case side wall 112 of the outer case 100, but the outer case 100 is not illustrated in Fig. 5 for convenience of description. Fig. 6 is a front view illustrating a configuration in which the inner case upper wall 310 according to the present embodiment is fixed to the weight 400. Fig. 6 shows a state after the inner case upper wall 310 (energy storage unit 20) is fixed to the weight 400. Fig. 6 is a view showing a configuration where the outer case side wall 113 and the inner case side wall 350 in the Y-axis minus direction are removed for convenience of description from a state where the energy storage unit 20 (energy storage device unit group 200, the inner case 300) and the weight 400 are housed in the outer case body 110 as viewed from the Y-axis minus direction.

The inner case upper wall 310 (first member) is fixed to the weight 400 (second member) fixed to the outer case side wall 112. Specifically, the inner case upper wall 310 (first member) includes an extending portion 311 extending toward the outer case side wall 112, and the extending portion 311 is fixed to the weight 400 (second member) or the outer case side wall 112. In the present embodiment, as shown in Figs. 5 and 6, the inner case upper wall 310 (first member) is fixed to the weight 400 (second member) fixed to the outer case side wall 112. That is, in the inner case upper wall 310 (first member), the extending portion 311 extending toward the outer case side wall 112 is fixed to the weight 400 (second member).

The extending portions 311 are disposed at both end portions of the inner case upper wall 310 in the X-axis direction. The extending portion 311 is a plate-like portion elongated in the Y-axis direction. The extending portion 311 is a portion extending in the X-axis direction from the side wall of the inner case 300. The extending portion 311 extends from an end portion of the energy storage device unit group 200 as viewed in the Y-axis direction. The extending portion 311 in the X-axis plus direction extends from the inner case side wall 330 in the X-axis plus direction, and the extending portion 311 in the X-axis minus direction extends from the inner case side wall 340 in the X-axis minus direction.

A fixing member 311a for fixing to the weight 400 is disposed on the extending portion 311. In the present embodiment, three fixing members 311a arranged in the Y-axis direction are arranged in one extending portion 311. Three fixed portions 400a arranged in the Y-axis direction are formed on the weight 400 at positions corresponding to the three fixing members 311a at the end portion in the Z-axis plus direction. In the present embodiment, the fixing member 311a is a bolt extending in the Z-axis minus direction and having a male screw portion, and the fixed portion 400a is a screw hole recessed in the Z-axis minus direction and having a female screw portion formed therein. The fixing member 311a is inserted into and connected (coupled) to the fixed portion 400a, whereby the extending portion 311 is fixed to the weight 400. As a result, the inner case upper wall 310 is disposed such that the extending portion 311 is overlapped with the weight 400 in the Z-axis plus direction, and is fixed to the weight 400 in the Z-axis direction.

In this manner, the inner case upper wall 310 is fixed to the two weights 400 on both sides in the X-axis direction at both end portions in the X-axis direction of the end portion in the Z-axis plus direction of the inner case 300. That is, the inner case upper wall 310 is fixed to the weight 400 at a position close to the opening 110a of the outer case body 110 in the inner case 300. As a result, when the inner case upper wall 310 is fixed to the weight 400, the fixing work becomes easy, and workability can be improved.

In a state where the inner case upper wall 310 is fixed to the weight 400, a gap is formed between the inner case 300 and the weight 400. That is, a gap is formed between the inner case side wall 330 and the weight 400 in the X-axis plus direction, and a gap is formed between the inner case side wall 340 and the weight 400 in the X-axis minus direction. Gaps are also formed between the inner case side walls 350 and 360 and the outer case body 110. That is, a gap is formed between the inner case side wall 350 and the outer case side wall 113 in the Y-axis minus direction, and a gap is formed between the inner case side wall 360 and the outer case side wall 113 in the Y-axis minus direction (not illustrated). With such a configuration, when the energy storage unit 20 is inserted into the outer case body 110, an inserting work becomes easy, and workability can be improved. By forming the gap, when an impact is applied to the energy storage apparatus 10 from the X-axis direction, the gap can absorb the force of the impact.

The energy storage device unit 210 is disposed so as to be sandwiched between the inner case upper wall 310 (first member) and the outer case bottom wall 111 in the Z-axis direction (first direction). Being sandwiched between two members means a state of being in direct contact with the two members without interposing another member therebetween, or a state of being in indirect contact with the two members via another member. That is, the energy storage device unit 210 directly or indirectly contacts the inner case upper wall 310 and the outer case bottom wall 111 in the Z-axis direction. In the present embodiment, the energy storage device unit 210 is sandwiched (sandwiched) between the inner case upper wall 310 and the outer case bottom wall 111 by being indirectly brought into contact with the inner case upper wall 310 and the outer case bottom wall 111 through the other energy storage device unit 210 and the inner case bottom wall 320. The plurality of energy storage device units 210 (energy storage device unit group 200) are sandwiched (sandwiched) between the inner case upper wall 310 and the outer case bottom wall 111 by being indirectly brought into contact with the inner case upper wall 310 and the outer case bottom wall 111 via the inner case bottom wall 320.

A plate-like member such as a rubber plate or a resin member for tolerance absorption, vibration suppression, or anti-slip, or another member such as a weight may be disposed between the inner case bottom wall 320 and the outer case bottom wall 111. In this case, it may be defined that the inner case bottom wall 320 or the outer case bottom wall 111 includes another member such as the plate-like member or the weight. Even in this case, it can be said that the energy storage device unit 210 is disposed so as to be sandwiched between the inner case upper wall 310 and the outer case bottom wall 111.

### [4 Description of Effects]

As described above, according to the energy storage apparatus 10 of the embodiment of the present invention, the energy storage device unit 210 (energy storage device unit group 200) is interposed between the first member and the outer case bottom wall 111, and the first member is fixed to the second member fixed to the outer case side wall 112. With such a configuration, the energy storage device unit 210 (the energy storage device unit group 200) can be easily fixed to the outer case 100 and hence, the movement of the energy storage device unit 210 (the energy storage device unit group 200) with respect to the outer case 100 can be restricted with a simple configuration. Therefore, vibration resistance or impact resistance of the energy storage apparatus 10 can be easily improved. When the first member is fixed to the second member fixed to the outer case side wall 112 by welding or the like, it is not necessary to provide a screw hole or the like for connecting the first member to the outer case side wall 112, which is effective from the viewpoint of waterproofing.

By fixing the first member to the weight 400 fixed to the outer case side wall 112, the first member can be fixed to the outer case side wall 112 via the weight 400. With such a configuration, the energy storage device unit 210 (the energy storage device unit group 200) can be easily fixed to the outer case 100 and hence, the movement of the energy storage device unit 210 (the energy storage device unit group 200) with respect to the outer case 100 can be restricted with a simple configuration. Since the weight is a heavy object, vibration resistance or impact resistance can be improved.

By forming the first member as the inner case upper wall 310 which is the upper wall of the inner case 300 housing the energy storage device units 210 (the energy storage device unit group 200), the energy storage device units 210 (the energy storage device unit group 200) can be easily fixed to the outer case 100 by using the inner case upper wall 310. As a result, the movement of the energy storage device unit 210 (the energy storage device unit group 200) with respect to the outer case 100 can be restricted with a simple configuration.

The inner case 300 is assembled from three or more walls (in the present embodiment, six walls of the inner case upper wall 310, the inner case bottom wall 320, and the inner case side walls 330 to 360) configured separately from each other. With such a configuration, the respective walls can be easily disposed on outer surface of the energy storage device units 210 (energy storage device unit group 200). Since the respective walls can be disposed on the outer surface of the energy storage device units 210 (energy storage device unit group 200), the movement of the energy storage device unit 210 (energy storage device unit group 200) can be easily restricted.

By providing the extending portion 311 on the inner case upper wall 310 (first member) and fixing the extending portion 311 to the weight 400 (second member), the energy storage device unit 210 (energy storage device unit group 200) can be easily fixed to the outer case 100. As a result, the movement of the energy storage device unit 210 (the energy storage device unit group 200) with respect to the outer case 100 can be restricted with a simple configuration.

The movement of the energy storage device unit 210 (energy storage device unit group 200) in the inner case 300 can be restricted by bringing the end plates 212 (side members) of the energy storage device unit 210 into contact with the inner surface of the inner case 300 (inner case side walls 330, 340). Since the end plate 212 (side member) can be firmly restrained by the inner case 300 after being brought into surface contact with the inner surface of the inner case 300, vibration resistance or impact resistance of the energy storage apparatus 10 can be improved.

### [5 Description of modification example]

Although the energy storage apparatus 10 according to the embodiment of the present invention has been described above, the present invention is not limited to this embodiment. The embodiment disclosed herein is an example in all respects, and the scope of the present invention includes all modifications within the meaning and scope equivalent to the claims.

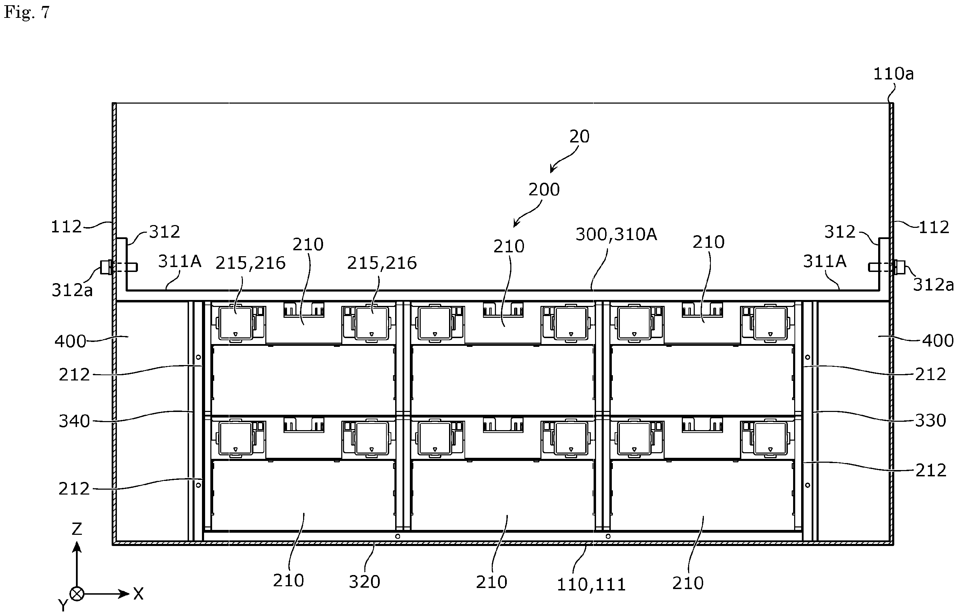

In the above embodiment, the inner case upper wall 310 (first member) is fixed to the weight 400 (second member) fixed to the outer case side wall 112. However, the inner case upper wall 310 (first member) may be fixed to the outer case side wall 112. Fig. 7 is a front view illustrating a configuration in which an inner case upper wall 310A according to the modification example of the present embodiment is fixed to the outer case side wall 112. Fig. 7 is a diagram corresponding to Fig. 6.

As illustrated in Fig. 7, in the present modification example, the inner case 300 includes an inner case upper wall 310A instead of the inner case upper wall 310 in the above-described embodiment. The inner case upper wall 310A includes extending portions 311A at both end portions in the X-axis direction. The extending portion 311A further extends in the X-axis direction from the extending portion 311 in the above embodiment, and includes L-shaped fixing portion 312 bent in the Z-axis plus direction. A portion of the fixing portion 312 extending in the Z-axis plus direction is in contact with the outer case side wall 112 in the X-axis direction, and is fixed to the outer case side wall 112 in the X-axis direction.

In the present modification example, a fixing member 312a is inserted into a through hole formed in the fixing portion 312 and the outer case side wall 112 to fix the fixing portion 312 and the outer case side wall 112. Specifically, the fixing member 312a is a bolt, and is inserted into the through hole of the outer case side wall 112 and then coupled to the female screw portion in the through hole of the fixing portion 312, whereby the fixing portion 312 and the outer case side wall 112 are fixed. In the present modification example, the fixing member 311a in the above embodiment is not disposed on the extending portion 311A, and the fixed portion 400a in the above embodiment is not formed on the weight 400. Other configurations of the present modification example are similar to those of the above-described embodiment, and thus detailed description thereof is omitted.

As described above, according to the energy storage apparatus according to the present modification example, the same effect as that of the above-described embodiment can be obtained. Particularly, in the present modification example, the energy storage device unit 210 (energy storage device unit group 200) is sandwiched between the inner case upper wall 310A (first member) and the outer case bottom wall 111, and the inner case upper wall 310A (first member) is fixed to the outer case side wall 112. With such a configuration, the energy storage device unit 210 (the energy storage device unit group 200) can be easily fixed to the outer case 100 and hence, the movement of the energy storage device unit 210 (the energy storage device unit group 200) with respect to the outer case 100 can be restricted with a simple configuration. Therefore, vibration resistance or impact resistance of the energy storage apparatus 10 can be easily improved. By providing the extending portion 311A on the inner case upper wall 310A (first member) and fixing the extending portion 311A to the outer case side wall 112, the energy storage device unit 210 (energy storage device unit group 200) can be easily fixed to the outer case 100. As a result, the movement of the energy storage device unit 210 (the energy storage device unit group 200) with respect to the outer case 100 can be restricted with a simple configuration.

In the above modification example, the inner case upper wall 310A (extending portion 311A) may be formed thinner than the inner case upper wall 310 (extending portion 311) in the above embodiment, and the fixing portion 312 may be formed by bending an end portion in the X-axis direction. The inner case upper wall 310A (extending portion 311A) may be formed by joining an L-shaped separate member as the fixing portion 312 to a flat plate-shaped member. Instead of forming the female screw portion in the through hole of the fixing portion 312, a nut may be disposed on the fixing portion 312 by welding or the like, and the fixing member 312a may be coupled to the nut. A recess (counterbore) may be formed in the outer case side wall 112, and a head portion of a bolt as the fixing member 312a may be disposed in the recess (counterbore). The fixing portion 312 may have a flat plate shape or the like instead of an L shape. The inner case upper wall 310A may be fixed to the outer case side wall 113. In the modification example described above, when it is unnecessary to adjust the weight of the energy storage apparatus with the weight 400 due to the outer case 100 itself being heavy, a weight other than the weight 400 being disposed, or the like, the energy storage apparatus may not include the weight 400 (second member).

### (Other modification examples)

In the above-described embodiment, the energy storage apparatus 10 may include a weight arranged along the outer case side wall 113 of the outer case body 110 and fixed to the outer case side wall 113 instead of the weight 400 or in addition to the weight 400. In this case, the inner case upper wall 310 may be fixed to a weight fixed to the outer case side wall 113 instead of the weight 400 or in addition to the weight 400. In addition to these weights, the energy storage apparatus 10 may also include other weights such as weights disposed along the outer case bottom wall 111.

In the above embodiment, the inner case upper wall 310 is fixed to the weight 400 by the extending portion 311 extending in the X-axis direction, but another member fixed to the inner case upper wall 310 may be fixed to the weight 400. A portion extending in the X-axis direction from an end portion of the energy storage device unit group 200 in the X-axis direction may be fixed to the weight 400.

In the above embodiment, the gap is formed between the inner case 300 and the weight 400, but the inner case 300 and the weight 400 may be in contact with each other. In this case, as long as the weight 400 is sandwiched between the inner case side wall 330 or 340 and the outer case side wall 112 and fixed to the outer case side wall 112, the weight may not be directly joined to the outer case side wall 112 by welding or the like. That is, the weight 400 (second member) may be fixed to the outer case side wall 112 by being inserted or press-fitted between the energy storage device unit 210 or the energy storage unit 20 and the outer case side wall 112 without a gap, instead of being fixed to the outer case side wall 112 by welding, bolts or the like. The inner case side wall 350 or 360 and the outer case side wall 113 may be in contact with each other.

In the above embodiment, the inner case 300 includes six walls formed separately from each other. However, the inner case 300 may include three or more walls formed separately from each other. That is, in the inner case 300, a plurality of arbitrary walls of the six walls may be integrated, or any wall may not be disposed. The inner case bottom wall 320 and at least one wall of the inner case side walls 330 to 360 may be integrated (integrally formed), or the inner case upper wall 310 and at least one wall of the inner case side walls 330 to 360 may be integrated (integrally formed). At least one wall of the inner case bottom wall 320 and the inner case side walls 330 to 360 may not be disposed. The inner case 300 may have a rod-shaped beam or the like instead of the plate-shaped wall. The inner case 300 may include only two members configured separately from each other or one member.

In the above-mentioned embodiment, the second member to which the inner case upper wall 310 (first member) is fixed is the weight 400 which adjusts the weight of the energy storage apparatus 10. However, the second member may be a member such as a spacer which does not have a function of adjusting the weight of the energy storage apparatus 10. In the above embodiment, the first member fixed to the second member is the inner case upper wall 310, but the present invention is not limited thereto. The first member may be any member as long as the member is disposed on one side in the first direction of the energy storage device unit 210 and sandwiches the energy storage device unit 210 between the first member and the outer case bottom wall 111 in the first direction, and may be a simple plate-like member or a rod-like member. In this case, the energy storage apparatus 10 may not include the inner case 300.

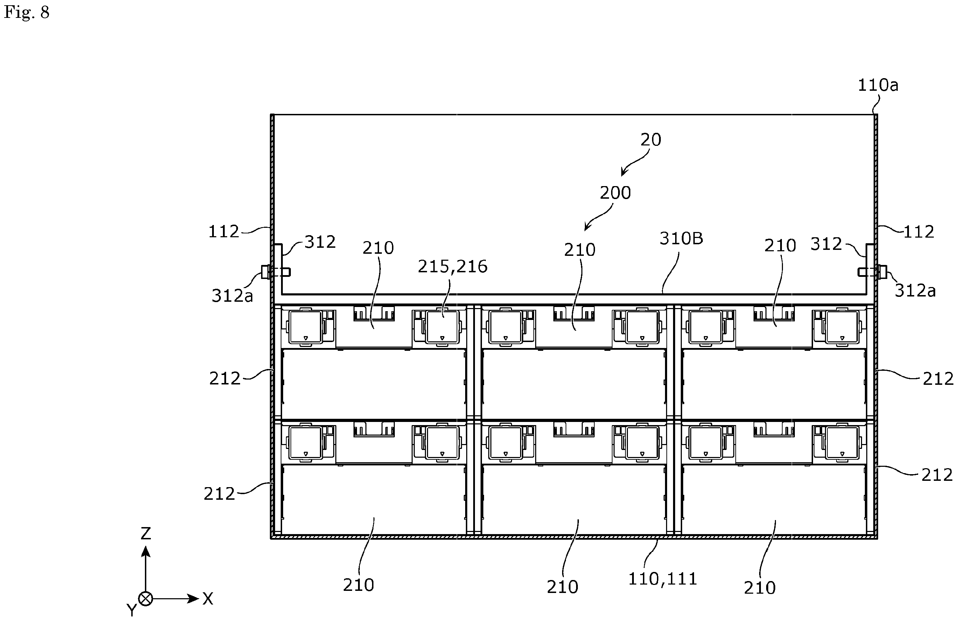

Specifically, a configuration as illustrated in Fig. 8 may be employed. Fig. 8 is a front view showing a configuration in which a first member 310B according to another modification example of the present embodiment is fixed to an outer case side wall 112. Fig. 8 is a diagram corresponding to Figs. 6 and 7. As shown in Fig. 8, in the present modification example, members other than the inner case upper wall 310A of the inner case 300 and the weight 400 are removed from the configuration shown in Fig. 7, and a portion extending in the X-axis direction from the inner case upper wall 310A is removed to form a first member 310B. That is, the first member 310B is a member which is disposed on one side (Z-axis plus direction) in the first direction of the energy storage device unit 210, sandwiches the energy storage device unit 210 with the outer case bottom wall 111 in the first direction (Z-axis direction), and is fixed to the outer case side wall 112. Other configurations of the present modification example are similar to those illustrated in Fig. 7, and thus detailed description thereof is omitted.

In the above-mentioned embodiment, in the energy storage device unit 210, the end plate 212 is exemplified as the side member, but the side plate may be exemplified as the side member, or other members may be exemplified as the side member. In the energy storage device unit 210, when the plurality of energy storage devices 211 which are flat in the Y-axis direction are arranged in the Y-axis direction, the end plates are disposed on both ends in the Y-axis direction of the energy storage device unit 210, and the side plates are disposed on both ends in the X-axis direction of the energy storage device unit 210. In this case, the side plate may be in contact with an inner surface of the inner case 300 (inner case side walls 330, 340) as an example of the side member. The external terminal 215 is disposed at an end portion of the energy storage device unit 210 in the Y-axis direction.

In the above-mentioned embodiment, both end portions of the energy storage apparatus 10 in the X-axis direction (both end portions of the inner case upper wall 310 in the X-axis direction and configurations around the both end portions) have the above-mentioned configuration. However, either end portion of both end portions of the energy storage apparatus 10 in the X-axis direction may not have the above-mentioned configuration.

In the above-mentioned embodiment, the energy storage apparatus includes the outer case which houses the inner case and the inner case which houses the energy storage device unit, but the energy storage apparatus may not include the inner case. The energy storage apparatus may include the first member disposed on the plus side in the Z-axis direction of the energy storage device unit.

In the above-mentioned embodiment, the outer case 100 does not necessarily include the outer case lid body 120, and hence the energy storage apparatus 10 is not limited to include all the above-mentioned configurations. The energy storage device unit 210 may not include the end plate 212 and the side plate 213. That is, the energy storage device unit 210 may have a structure in which the energy storage device 211 is housed in a resin-molded integrated box (case) instead of the structure in which the energy storage device unit is restrained by the end plate 212 and the side plate 213.

A mode constructed by arbitrarily combining the above embodiment and the above modification example is also included in the scope of the present invention.

### INDUSTRIAL APPLICABILITY

The present invention can be applied to an energy storage apparatus or the like including an energy storage device unit including an energy storage device such as a secondary battery.

### DESCRIPTION OF REFERENCE SIGNS

10: energy storage apparatus
20: energy storage unit
100: outer case
110: outer case body
110a: opening
111: outer case bottom wall
112, 113: outer case side wall
120: outer case lid body
200: energy storage device unit group
210: energy storage device unit
211: energy storage device
212: end plate
213: side plate
215: external terminal
300: inner case
310, 310A: inner case upper wall
310B: first member
311, 311A: extending portion
311a, 312a: fixing member
312: fixing portion
320: inner case bottom wall
330, 340, 350, 360: inner case side wall
400: weight
400a: fixed portion

## Claims

1. An energy storage apparatus comprising:
an energy storage device unit including an energy storage device;
an outer case including an outer case body opened to one side in a first direction, the outer case housing the energy storage device unit; and
a first member disposed on one side in the first direction with respect to the energy storage device unit,
wherein the outer case includes an outer case bottom wall disposed on another side in the first direction and an outer case side wall facing to a second direction intersecting the first direction, and
the first member is fixed to a second member fixed to the outer case side wall, or is fixed to the outer case side wall.

2. The energy storage apparatus according to claim 1, wherein the second member is a weight.

3. The energy storage apparatus according to claim 1 or 2, wherein
the first member includes an extending portion extending toward the outer case side wall, and
the extending portion is fixed to the second member or the outer case side wall.

4. The energy storage apparatus according to claim 1 or 2, further comprising an inner case housed in the outer case and housing and holding the energy storage device unit, wherein the first member is an upper wall of the inner case.

5. The energy storage apparatus according to claim 4, wherein the inner case includes three or more walls configured separately from each other.

6. The energy storage apparatus according to claim 4, wherein
the energy storage device unit includes a side member disposed on a side of the energy storage device, and
the side member is in contact with an inner surface of the inner case.
